# EUROPEAN PATENT SPECIFICATION

(11) **EP 3 088 244 B1**
(45) Date of publication and mention of the grant of the patent: **15.08.2018**
(21) Application number: 15165379.7
(22) Date of filing: 28.04.2015
(51) Int. Cl.: B60N 3/10

(54) **CUP HOLDER**
BECHERHALTER
PORTE-GOBELET

(43) Date of publication of application: 02.11.2016
(73) Proprietor: Volvo Car Corporation, 40531 Göteborg (SE)
(72) Inventor: Göthlin, Jonas, 42343 Torslanda (SE); Levy, Todd, 41125 Göteborg (SE)
(74) Representative: Valea AB

(56) References cited:
- EP-A1- 2 435 273
- DE-A1-102008 024 694
- DE-A1-102011 114 618
- DE-A1-102012 222 554
- FR-A1- 2 940 208
- JP-U- H0 426 137
- US-A- 5 238 211
- US-B1- 6 349 913

## Description

### Field of the Invention

The present invention relates to a cup holder arrangement for a vehicle.

### Background

User's of the vehicles are becoming more demanding with regards to accessories and equipment in their vehicles. At the same time, the vehicle size does not appear to change dramatically with technological advances. Consequently, if the amount of accessories increases, the available space in the interior of the vehicle becomes more and more limited. One example of a commonly desired accessory is a cup holder for holding a driver's or a passenger's cup or bottle.

An example of a cup holder is shown in KR101403814 where the cup holder is in the form of a lever holding the cup in place against the wall of a compartment. When the cup holder is not used, the lever may be pushed into a cavity of the wall.

However, the construction of the cup holder in the compartment in KR101403814 limits the options for placement of the cup holder location, and requires that the cup is placed to the sidewall of the compartment.

More cup holders are presented in FR2940208 and EP2435273. FR2940208 shows a case having a wedging element comprising one end that is rotationally mounted around a rotational axis and another end carrying circular arcs. The circular arcs extend in a horizontal plane when the wedging element is in a usage position, so as to wedge a container between the circular arcs and a support surface of a back wall or vertical wall. EP2435273 relate to a retaining device, particular for drink containers, disposed in a storage compartment of a motor vehicle, and comprising pivotally supported retaining bracket that can be adjusted between a non-use position and use position, wherein the retaining bracket at least partially bounds a drink container compartment in the storage compartment. Moreover, the retaining bracket is rotationally supported at two opposite side walls of the storage compartment, particularly having approximately horizontal pivot axes.

### Summary of the Invention

In view of the above, it is a general object of the present invention to provide an improved cup holder arrangement which provides improved storage possibilities for items.

According to a first aspect of the present invention it is therefore provided a cup holder arrangement comprising:
a storage compartment for storage of items; and
a holder member comprising a frame configured to receive and support a cup in an opening of the frame, the holder member being rotatably attached to the storage compartment, so as to be rotatable between an upright position where a cup may be received in the opening and a sideway position where the opening is facing sideways.

In the interior of a vehicle, it is often desired to have space for storage of e.g. keys, mobile phones, books, etc. These spaces are often limited and typically not designed to hold objects of arbitrary shapes. Furthermore, most vehicles have a cup holder suitable for holding, apart from a cup, e.g. bottles or the like. The present invention is based on the realization that a cup holder arranged in a storage compartment, for example in a vehicle, is not always used. At the times when the cup holder is not used and the storage compartment of a vehicle is sometimes desirable to utilize, it is convenient to simply rotate the holder member of the cup holder such that space for storage is available. Furthermore, the cup holder member may in this way also function as a support for storage of the items in the storage compartment. For example, if a user wants to store electronic equipment such as a tablet or a lap top, it is convenient to store it up-right with support from the holder member. In addition, the invention enables to more conveniently be able to store objects which require side support to not fall over and break, at least at times when the cup holder is not used. Storage of elongated items such as umbrellas may also be facilitated.

A rotation axis of the holder member may coincide with a center axis of the holder member. It should be noted that the rotation axis is an imaginary axis and not a physical axis. The center axis is also an imaginary axis. The center axis may intersect the frame and also be central such that the center axis intersects the middle of the opening of the frame. If a linkage element is fixated in the middle of the storage compartment, and the holder member is rotatably attached to the linkage member at a center axis of the holder member, then the holder member will remain in the middle of the storage compartment even after rotation to or from the up-right position or the sideway position.

"Rotatably attached" should be interpreted as that the parts being rotatably attached do not fall apart during normal operation. This may also be referred to as "fixedly attached".

The frame at least partly encircles the opening. Thus, the frame may have a cut-out portion and thereby be partly open. However, prefereably, the frame encircles the entire opening.

According to the invention, when the holder member is in the sideway position, the storage compartment is divided by the holder member into two storage sub-compartments. Thereby, a user or more than one user may advantageously store items in different compartments. Alternatively or additionally, folders or other flat items may more easily be supported due to the multiple (two) compartments. For example, the sub-compartments may be relatively narrow (compared to the full storage compartment) facilitating storage of flat items in up-right position.

The cup holder arrangement may be able to hold two cups. Thus, the holder member may comprise a first holder portion and a second holder portion arranged adjacent to each other, wherein each of the first holder portion and the second holder portion is configured to receive and support a respective cup. The first holder portion and the second holder portion may be arranged side-by-side along the rotation axis of the holder member.

In one embodiment, the first holder portion and the second holder portion are formed from a single frame with a single opening, the holder member comprising a protrusion element attached to the frame and extending inwards in the frame towards an opposite side of the frame for providing support for holding the respective cup in place.

Alternatively, for holding two cups, each of the first holder portion and the second holder portion are annular and attached to each other side-by-side. In this case the holder member is formed in the shape of an "8".

The frame may support a cup independently of side walls of the storage compartment. In other words, the cup is held in the up-right position with support from the frame independent from support by the side walls of the storage compartment. This way, the holder member may be placed (during assembly) almost anywhere in the storage compartment without consideration of the location of the side walls of the storage compartment.

Furthermore, the holder member may be rotatably attached to a base of the storage compartment.

In one embodiment of the invention, a plane of the opening in the upright position and the sideway position may be 90 degrees apart. Thus, the angle between the plane of the opening in the upright position and the sideway position respectively may be about 90 degrees. The plane may span the entire opening of the frame of the holder member.

The cup holder arrangement is advantageously arranged in a vehicle. In particular, the cup holder arrangement may be arranged in the tunnel console or center console between the driver seat and the passenger seat in the front part of the vehicle.

The cup holder may be made from for example a plastic material, a metallic material, composite materials, etc.

In the upright position and when the cup holder arrangement is arranged in a vehicle, the holder member is arranged with the opening substantially parallel with the ground on which the vehicle is present (e.g. a plane intersecting the contact surfaces between each wheel and the ground). In the sideway position, the holder member (e.g. the opening) is arranged orthogonal with the ground.

Further features of, and advantages with, the present invention will become apparent when studying the appended claims and the following description. The skilled person realizes that different features of the present invention may be combined to create embodiments other than those described in the following, without departing from the scope of the present invention.

### Brief Description of Drawings

These and other aspects of the present invention will now be described in more detail, with reference to the appended drawings showing currently preferred embodiments of the invention, wherein:
Fig. 1a-c shows an example embodiment of a cup holder arrangement with a holder member in an upright position;
Fig. 2 shows an example embodiment of an cup holder arrangement with a holder member in a sideway position;
Fig. 3 shows an example embodiment of a cup holder arrangement with a holder member in an upright position;
Fig. 4 shows an example embodiment of an cup holder arrangement with a holder member in a sideway position; and
Fig. 5 shows an example cup holder arrangement arranged in a vehicle.

### Detailed Description of Embodiments of the Invention

In the following description, the present invention is mainly described with reference to a cup holder arrangement for a vehicle being a car. However, the invention relates to a cup holder arrangement which may be mounted in any type of vehicle such as e.g. a truck.

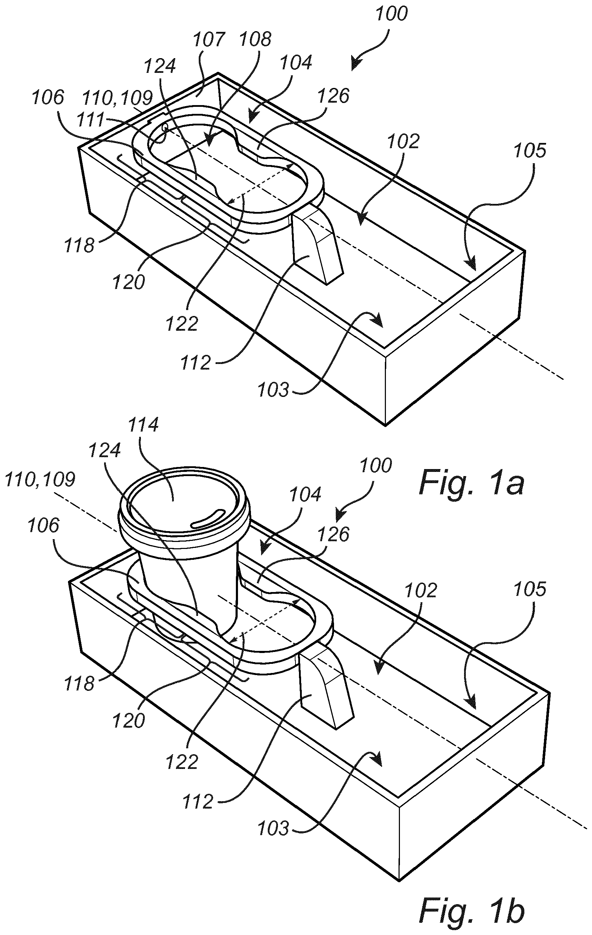

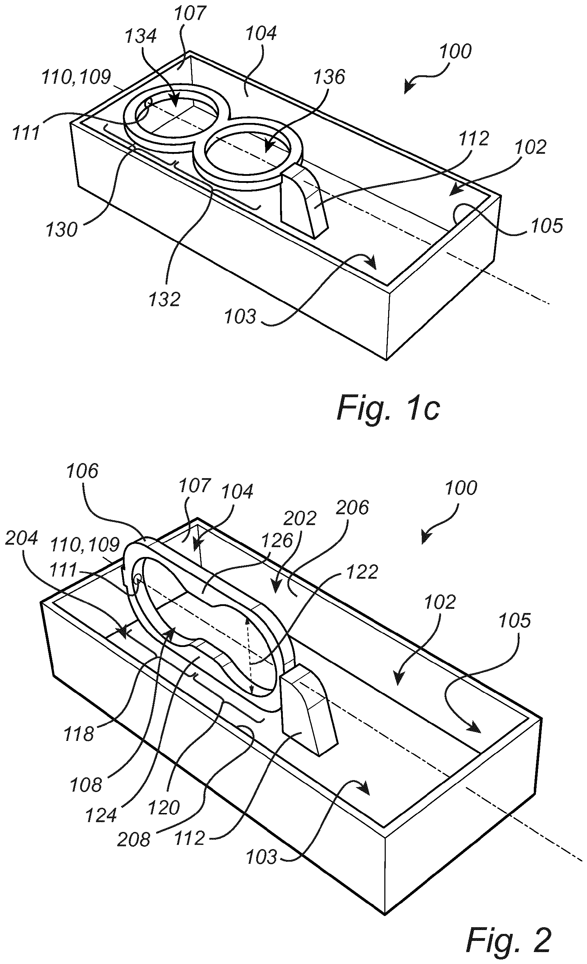

Fig. 1a illustrates an example of a cup holder arrangement 100 which may be arranged in a car. The cup holder arrangement 100 comprises a storage compartment 102 which may be used for storage of items such as keys, mobile phones, folders, umbrellas, etc. Furthermore, the cup holder arrangement 100 comprises a holder member 104 comprising a frame 106, and there is further shown a linkage element 112 which is fixedly attached to the storage compartment 102. In Fig. 1, the linkage element 112 is attached to the base 103 of the storage compartment 102, however, the linkage element 112 may be attached to other parts of the storage compartment 102, such as a side wall 105. Furthermore, the holder member may be rotatbly attached to the base 103 or to a side wall 105 without the linkage element 112, thus only via a joint 111. Although illustrated as a cup holder arrangement 100 for two cups, the holder member 104 may likewise be adapted to hold only a single cup, or more than two cups, such as e.g. 3, or 4 cups if there is space at the mounting site.

The holder member 104 is rotatably attached to the linkage element 112 such that the holder member 104 is rotatable about a rotation axis 110. Furthermore, the holder member 104 shown here is also rotatably fixated to the sidewall 107 via a joint 111. Thereby, the holder member 104 is rotatable between an upright position where a cup 114 (Fig. 1b) may be received in the opening 108 and a sideway position (Fig, 2) where the opening 108 is facing sideways. In Fig. 1a-b, the holder member 104 is in the upright position where the cup 114 may be received by, and held in place by the holder member 104. Rotatably fixated in this example embodiment means that the the only degree of freedom for the holder arrangement is the rotation about the rotation axis 110.

Alternatively or additionally, the holder member is rotatably attached between the sidewalls 105 and 107 with joints 111 without the linkage element.

In Fig. 2 the holder member 104 is in the sideway position where the opening 108 is facing sideways, towards a side wall 206 and/or 208. When the holder member is in the sideway position, the storage compartment 102 is divided into two sub-compartments 202 and 204 by the holder member 104. Furthermore, the holder member 104 functions as a support for items of appropriate size stored in the storage compartment 102. For example, a lap top, or a tablet, or a folder may be placed in an upright orientation with support from the holder member 104. Furthermore, elongated items such as e.g. an umbrella may be placed in any of the relatively elongated sub-compartments 202 and 204. The upright position of the holder member 104 (Fig. 1a) and the sideway position of the holder member 104 (Fig. 2) are shown as having the plane of the opening 108 being 90 degrees apart. However, other angular relationships may be possible, as long as a cup may be received in the holder member 104 in the upright position (Fig. 1a).

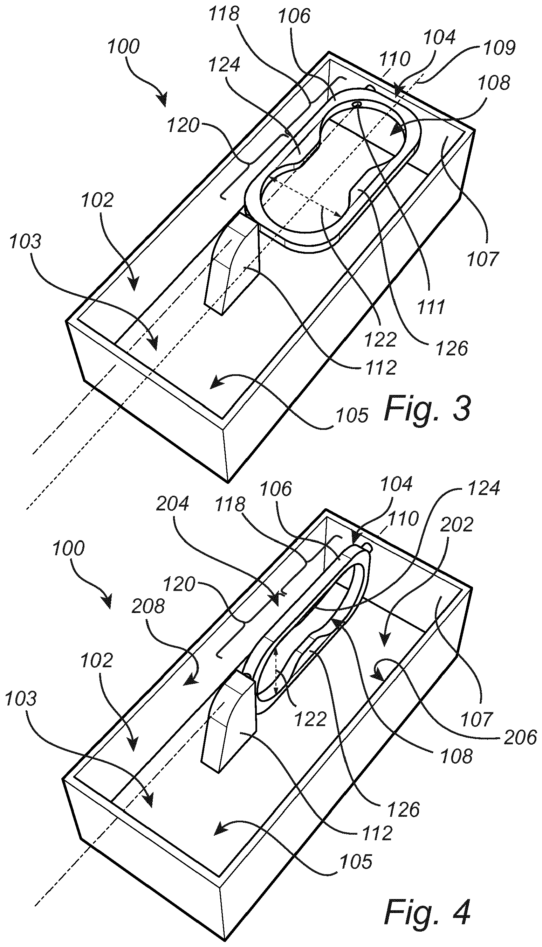

In Fig. 1a-c and Fig. 2, the rotation axis 110 coincides with a central axis 109 of the holder member. The central axis 109 (which is an imaginary axis) is in the middle of the frame 106, thereby it intersects the frame 106 and divides the width 122 of the frame 106 opening 108 into two imaginary halves. However, the rotation axis 110 may also be offset from the center axis 109, as shown in Fig. 3 and Fig. 4. Fig. 3 shows the holder member 104 in an upright position and Fig. 4 shows the holder member 104 in the sideway position. By allowing the rotation axis 110 to be offset from the center axis 109, the sub-compartments 202, 204 (Fig. 4) may have different size, relative each other. Storage of items of a certain size may fit better in a smaller or larger storage compartment. Different sized storage sub-compartments 202, 204 is advantageously enabled by allowing the rotation axis 110 to be offset from the center axis 109.

The holder member 104 shown in Fig. 1a-b and Fig. 2-4 is adapted to receive two cups. There is thus a first holder portion 118 and a second holder portion 120 arranged adjacent to each other. The holder member 104 is formed from a frame 106 with a single opening 108. Furthermore, protrusions 124 and 126 on the frame 106 extend inwards on the frame to provide support for holding a cup in place in the frame 106. Thus, both the protrusions 124, 126 provide support for a cup 114 in each of the holder portions 118, 120.

In one embodiment, the first holder portion 130 and the second holder portion 132 of the holder member 104 are annular, as shown in Fig. 1c. Thus, instead of a single opening 108, the holder member here (Fig. 1c) has two openings 134, 136, one for a respective cup. The annular holder portions 134 and 136 are fixated to each other (e.g. made in one piece or mounted together) in a side-by-side manner with the openings 134, 136 facing in the same direction.

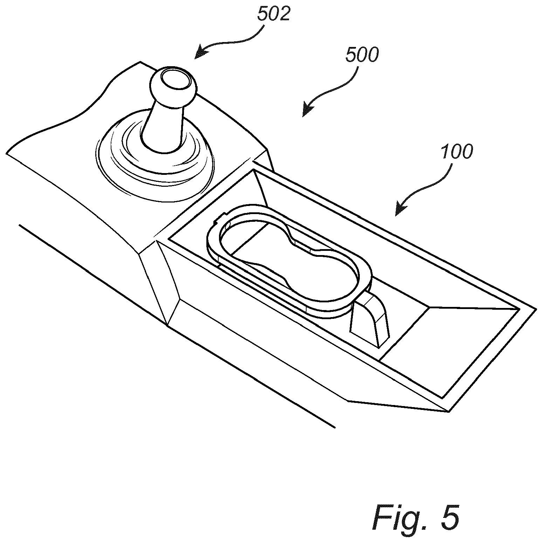

Fig. 5 illustrates an example of a cup holder arrangement 100 arranged in a center console (or alternatively "tunnel console") of a vehicle, for example in a car. In Fig. 5 there is shown that the cup holder arrangement 100 is arranged nearby the gear shift lever 502, between the front seats in the car, easily accessible to both the driver and a passenger of the car.

Additionally, variations to the disclosed embodiments can be understood and effected by the skilled person in practicing the claimed invention, from a study of the drawings, the disclosure, and the appended claims. For example, although illustrated herein as a cup holder for two cups, the invention is equally applicable to receiving and supporting a single cup, or more than two cups, e.g. 3, 4, or 5 cups if there is enough space.

It should be noted that the holder member as shown in the description may not be folded away into an opening.

In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A cup holder (100) arrangement comprising:
a storage compartment (102) for storage of items; and
a holder member (104) comprising a frame (106) configured to receive and support a cup (114) in an opening (108) of said frame, said holder member being rotatably attached to said storage compartment, **characterised in that** the holding member is attached so as to be rotatable between an upright position where a cup may be received in said opening and a sideway position where said opening is facing sideways, and when said holder member is in the sideway position, said storage compartment is divided by said holder member into two storage sub-compartments (202, 204).

2. The cup holder arrangement according to claim 1, wherein a rotation axis (110) of said holder member coincides with a center axis (110) of said holder member.

3. The cup holder arrangement according to any one of the preceding claims, wherein said holder member comprises a first holder portion (118; 134) and a second holder portion (120; 134) arranged adjacent to each other, wherein each of said first holder portion and said second holder portion is configured to receive and support a respective cup.

4. The cup holder arrangement according to claim 3, wherein said first holder portion and said second holder portion are formed from a single frame with a single opening, said holder member comprising a protrusion (124, 126) element attached to said frame and extending inwards in said frame towards an opposite side of said frame for providing support for holding said respective cup in place.

5. The cup holder arrangement according to claim 4, wherein each of said first holder portion and said second holder portion are annular and fixated to each other side-by-side.

6. The cup holder arrangement according to claim 4, wherein said first holder portion and said second holder portion are arranged side-by-side along said rotation axis of said holder member.

7. The cup holder arrangement according to any one of the preceding claims, wherein said frame supports a cup independently of side walls of said storage compartment.

8. The cup holder arrangement according to any one of the preceding claims, wherein said holder member is rotatably attached to a base (103) of said storage compartment.

9. The cup holder arrangement according to any one of the preceding claims, wherein said holder member is rotatably attached to a first side wall and to a second side wall of said storage compartment.

10. The cup holder arrangement according to any one of the preceding claims, wherein a plane of said opening in said upright position and in said sideway position is 90 degrees apart.

11. The cup holder arrangement according to any one of the preceding claims, wherein said frame is partly open.

12. A vehicle comprising the cup holder arrangement according to any one of the preceding claims.

## Patentansprüche

1. Becherhalteranordnung (100), umfassend:
ein Aufbewahrungsfach (102) zum Aufbewahren von Gegenständen und
ein Halterelement (104), das einen Rahmen (106) umfasst, der dazu ausgelegt ist, in einer Öffnung (108) des Rahmens einen Becher (114) aufzunehmen und zu halten, wobei das Halterelement auf drehbare Weise an dem Aufbewahrungsfach angebracht ist,
**dadurch gekennzeichnet, dass** das Halteelement derart angebracht ist, dass es zwischen einer aufrechten Stellung, in der ein Becher in der Öffnung aufgenommen werden kann, und einer seitlichen Stellung, in der die Öffnung auf die Seite weist, drehbar ist, und wobei, wenn sich das Halterelement in der seitlichen Stellung befindet, das Aufbewahrungsfach durch das Halterelement in zwei Aufbewahrungsunterfächer (202, 204) unterteilt ist.

2. Becherhalteranordnung nach Anspruch 1, wobei eine Drehachse (110) des Halterelements mit einer Mittelachse (110) des Halterelements zusammenfällt.

3. Becherhalteranordnung nach einem der vorhergehenden Ansprüche, wobei das Halterelement einen ersten Halterabschnitt (118; 134) und einen zweiten Halterabschnitt (120; 134) umfasst, die angrenzend aneinander angeordnet sind, wobei der erste Halterabschnitt und der zweite Halterabschnitt jeweils dazu ausgelegt sind, einen entsprechenden Becher aufzunehmen und zu halten.

4. Becherhalteranordnung nach Anspruch 3, wobei der erste Halterabschnitt und der zweite Halterabschnitt aus einem einzelnen Rahmen mit einer einzelnen Öffnung gebildet sind, wobei das Halterelement ein Vorsprungelement (124, 126) umfasst, das an dem Rahmen angebracht ist und sich in dem Rahmen nach innen zu einer gegenüberliegenden Seite des Rahmens erstreckt, um eine Stütze zum Halten des entsprechenden Bechers an Ort und Stelle bereitzustellen.

5. Becherhalteranordnung nach Anspruch 4, wobei der erste Halterabschnitt und der zweite Halterabschnitt jeweils ringförmig sind und nebeneinander fixiert sind.

6. Becherhalteranordnung nach Anspruch 4, wobei der erste Halterabschnitt und der zweite Halterabschnitt jeweils entlang der Drehachse des Halterelements nebeneinander angeordnet sind.

7. Becherhalteranordnung nach einem der vorhergehenden Ansprüche, wobei der Rahmen einen Becher unabhängig von Seitenwänden des Aufbewahrungsfachs hält.

8. Becherhalteranordnung nach einem der vorhergehenden Ansprüche, wobei das Halterelement auf drehbare Weise an einer Basis (103) des Aufbewahrungsfachs angebracht ist.

9. Becherhalteranordnung nach einem der vorhergehenden Ansprüche, wobei das Halterelement auf drehbare Weise an einer ersten Seitenwand und an einer zweiten Seitenwand des Aufbewahrungsfachs angebracht ist.

10. Becherhalteranordnung nach einem der vorhergehenden Ansprüche, wobei eine Ebene der Öffnung in der aufrechten Stellung und in der seitlichen Stellung um 90 Grad voneinander abgesetzt sind.

11. Becherhalteranordnung nach einem der vorhergehenden Ansprüche, wobei der Rahmen zum Teil offen ist.

12. Fahrzeug, umfassend die Becherhalteranordnung nach einem der vorhergehenden Ansprüche.

## Revendications

1. Agencement de porte-gobelets (100) comprenant :
un compartiment de rangement (102) pour ranger des objets ; et
un élément de support (104) comprenant un cadre (106) configuré pour recevoir et soutenir un gobelet (114) dans une ouverture (108) dudit cadre, ledit élément de support étant fixé rotatif audit compartiment de rangement,
**caractérisé en ce que** l'élément de support est fixé de façon à pouvoir tourner entre une position verticale, où un gobelet peut être reçu dans ladite ouverture, et une position de côté, où ladite ouverture est tournée de côté, et, quand ledit élément de support est en position de côté, ledit compartiment de rangement est divisé par ledit élément de support en deux sous-compartiments de rangement (202, 204).

2. Agencement de porte-gobelets selon la revendication 1, dans lequel l'axe de rotation (110) dudit élément de support coïncide avec l'axe central (110) dudit élément de support.

3. Agencement de porte-gobelets selon l'une quelconque des revendications précédentes, dans lequel ledit élément de support comprend une première partie (118 ; 134) de support et une seconde partie (120 ; 134) de support disposées tout à côté l'une de l'autre, dans lequel chacune desdites première partie de support et seconde partie de support est configurée pour recevoir et soutenir un gobelet respectif.

4. Agencement de porte-gobelets selon la revendication 3, dans lequel ladite première partie de support et ladite seconde partie de support sont constituées d'un seul cadre ayant une unique ouverture, ledit élément de support comprenant une saillie (124, 126) fixée audit cadre et s'étendant vers l'intérieur dans ledit cadre vers le côté opposé dudit cadre pour offrir un support afin de maintenir en place ledit gobelet respectif.

5. Agencement de porte-gobelets selon la revendication 4, dans lequel chacune desdites première partie de support et seconde partie de support est annulaire et fixée l'une à l'autre côte à côte.

6. Agencement de porte-gobelets selon la revendication 4, dans lequel ladite première partie de support et ladite seconde partie de support sont disposées côte à côte suivant ledit axe de rotation dudit élément de support.

7. Agencement de porte-gobelets selon l'une quelconque des revendications précédentes, dans lequel ledit cadre soutient un gobelet indépendamment des parois latérales dudit compartiment de rangement.

8. Agencement de porte-gobelets selon l'une quelconque des revendications précédentes, dans lequel ledit élément de support est fixé rotatif à la base (103) dudit compartiment de rangement.

9. Agencement de porte-gobelets selon l'une quelconque des revendications précédentes, dans lequel ledit élément de support est fixé rotatif à une première paroi latérale et à une deuxième paroi latérale dudit compartiment de rangement.

10. Agencement de porte-gobelets selon l'une quelconque des revendications précédentes, dans lequel le plan de ladite ouverture dans ladite position verticale et celui dans ladite position de côté sont distants de 90 degrés.

11. Agencement de porte-gobelets selon l'une quelconque des revendications précédentes, dans lequel ledit cadre est partiellement ouvert.

12. Véhicule comprenant l'agencement de porte-gobelets selon l'une quelconque des revendications précédentes.
